# EUROPÄISCHE PATENTSCHRIFT

(11) **EP 0 603 548 B1**
(45) Veröffentlichungstag und Bekanntmachung des Hinweises auf die Patenterteilung: **12.02.1997**
(21) Anmeldenummer: 93118621.7
(22) Anmeldetag: 19.11.1993
(51) Int. Cl.: C09K 3/18

(54) **Erdalkali-Natrium-Acetat, ein Verfahren zu seiner Herstellung und seine Verwendung**
Acetate of sodium and alkaline earth metal, process of preparation and use
Acétate de sodium et d'alcalino-terreux, procédé de préparation et utilisation

(30) Priorität: 17.12.1992 DE 4242698
(43) Veröffentlichungstag der Anmeldung: 29.06.1994
(73) Patentinhaber: HOECHST AKTIENGESELLSCHAFT, 65926 Frankfurt am Main (DE)
(72) Erfinder: Himmrich, Johannes, Dr., D-50354 Hürth (DE); Schimmel, Günther, Dr., D-50374 Erftstadt (DE); Pöllmann, Klaus, Dr., D-84489 Burghausen (DE)

(56) Entgegenhaltungen:
- WO-A-88/05456
- WO-A-92/17557
- US-A- 4 377 488
- US-A- 4 400 285
- US-A- 4 425 251

## Beschreibung

Die vorliegende Erfindung betrifft ein Erdalkali-Natrium-Acetat, ein Verfahren zu seiner Herstellung sowie seine Verwendung als Enteisungsmittel.

Herkömmliche Enteisungsmittel wie Alkali- oder Erdalkalichloride weisen zwar jeweils eine hohe Tauleistung und Taugeschwindigkeit auf, wirken jedoch stark korrosiv auf Metall und Beton ein und werden als umweltbelastend eingestuft. Im Unterschied dazu ist zwar Harnstoff kaum korrosiv, besitzt aber leider nur eine geringe Tauleistung und gilt wegen seines hohen Stickstoffgehaltes als stark umweltbelastend. Alkali-Acetate haben zwar eine hohe Tauleistung und bewirken nur eine geringe Metallkorrosion, sie greifen jedoch Beton durch den Austausch von Calcium gegen Alkali korrosiv an. Schließlich weisen Erdalkali-Acetate eine gute Metall- und Betonverträglichkeit auf, wegen ihrer langsamen Lösegeschwindigkeit ist jedoch ihre Taugeschwindigkeit niedrig.

Aus der US-PS 4 855 071 ist ein Verfahren zur Herstellung eines Enteisungsmittels bekannt, bei welchem man zunächst aus Erdalkali- oder Alkalibasen oder deren Mischungen und Wasser einen Slurry herstellt. In den Slurry trägt man eine Carbonsäure mit 1 bis 4 Kohlenstoff-Atomen in einer Menge ein, die zur vollständigen Neutralisation der Basen ausreicht sowie soviel Wasser, daß der resultierende, aus Erdalkali- oder Alkalicarboxylaten oder deren Mischungen bestehende Slurry flüssig und pumpbar ist. Den auf Temperaturen von etwa 40 bis 120°C erhitzten Carboxylat-Slurry verteilt man in dünner Schicht auf Substrat-Teilchen und trocknet schließlich die beschichteten Substrat-Teilchen. Es ist Aufgabe der vorliegenden Erfindung, eine Substanz sowie ein Verfahren zu ihrer Herstellung anzugeben, welche als Enteisungsmittel mit guter Tauleistung sowie hoher Taugeschwindigkeit geeignet ist und welche darüber hinaus umweltfreundlich und wenig korrosiv gegen Metall und Beton ist.

Die erfindungsgemäße Substanz ist ein Erdalkali-Natrium-Acetat mit folgender Analyse:
18 bis 22 Gewichts-% Calcium (Ca⁺⁺),
0 bis 1 Gewichts-% Magnesium (Mg⁺⁺),
4 bis 7 Gewichts-% Natrium (Na⁺),
66 bis 75 Gewichts-% Acetat (CH₃COO⁻),
0 bis 7 Gewichts-% Wasser,
0 bis 2 Gewichts-% wasserunlösliche Anteile.

Das Erdalkali-Natrium-Acetat gemäß der Erfindung zeigt folgende Röntgendiffraktion:

| d / A | Intensität | d / A | Intensität |
|---|---|---|---|
| 12,75 +- 0,2 | s | 2,39 +- 0,02 | sch |
| 9,30 +- 0,1 | m | 2,29 +- 0,02 | sch |
| 6,00 +- 0,08 | m | 2,23 +- 0,02 | msch |
| 4,65 +- 0,05 | sch | 2,13 +- 0,02 | m |
| 3,61 +- 0,04 | sch | 2,04 +- 0,02 | sch |
| 3,40 +- 0,04 | ss | 1,96 +- 0,02 | msch |
| 3,28 +- 0,04 | m | 1,87 +- 0,02 | sch |
| 3,12 +- 0,03 | sch | 1,84 +- 0,02 | sch |
| 2,88 +- 0,03 | msch | 1,80 +- 0,02 | msch |
| 2,65 +- 0,03 | sch | 1,70 +- 0,02 | sch |
| 2,55 +- 0,02 | sch | 1,57 +- 0,02 | sch |
| ss = sehr stark s = stark m = mittel msch = mittel-schwach sch = schwach | | | |

Dem Erdalkali-Natrium-Acetat gemäß der Erfindung können weiterhin bis zu 50 Gewichts% Erdalkali- und/oder Alkali-Carboxylate mit 1 bis 4 Kohlenstoffatomen zugemischt sein.

Das erfindungsgemäße Erdalkali-Natrium-Acetat kann dadurch hergestellt werden, daß man ein Calciumoxid mit mindestens 85 % CaO, Essigsäure und Natronlauge miteinander umsetzt und das Umsetzungsprodukt zu Teilchen von 0,5 bis 5 mm, vorzugsweise 1,5 bis 2,5 mm, granuliert.

Das Verfahren zur Herstellung des erfindungsgemäßen Erdalkali-Natrium-Acetates kann weiterhin wahlweise auch noch dadurch ausgestaltet sein, daß
a) festes Calciumoxid mit überschüssiger Essigsäure unter Kneten umgesetzt wird und das essigsaure Umsetzungsprodukt nach Zugabe von Natronlauge weitergeknetet wird;
b) festes Calciumoxid mit teilneutralisierter Essigsäure unter Kneten umgesetzt wird;
c) eine aus Calciumoxid und Wasser gewonnene Aufschlämmung unter Rühren mit Essigsäure und Natronlauge umgesetzt wird;
d) eine aus Calciumoxid und Wasser gewonnene Aufschlämmung unter Rühren mit teilneutralisierter Essigsäure umgesetzt wird;
e) die teilneutralisierte Essigsäure aus Natronlauge und Essigsäure erhalten ist;
f) die teilneutralisierte Essigsäure aus Natriumcarbonat und Essigsäure erhalten ist;
g) Essigsäure mit mindestens 98 Gewichts-% CH₃COOH verwendet ist;
h) Natronlauge mit mindestens 40 Gewichts-% NaOH verwendet ist;
i) die nach der Umsetzung vorliegende Lösung oder Suspension in einem Sprühtrockner mit Heißluft von 150 bis 400°C getrocknet wird;
j) die nach der Umsetzung vorliegende Lösung oder Suspension mit Hilfe eines Fließbett-Trockners unter gleichzeitiger Granulierung getrocknet wird.

Schließlich kann das erfindungsgemäße Erdalkali-Natrium-Acetat als umweltfreundliches, wenig korrosives Enteisungsmittel verwendet werden, wobei dem Erdalkali-Natrium-Acetat weiterhin bis zu 50 Gewichts% Erdalkali- und/oder Alkali-Carboxylate mit 1 bis 4 Kohlenstoffatomen zugemischt sein können.

Das Erdalkali-Natrium-Acetat gemäß der Erfindung weist eine deutlich höhere Auflösungsgeschwindigkeit als Erdalkali-Acetate oder Mischungen von Erdalkali-Acetaten mit Alkali-Acetaten auf und zeichnet sich damit bei Verwendung als Enteisungsmittel durch eine höhere Taugeschwindigkeit aus.

Zur Bestimmung der Auflösungsgeschwindigkeit von Enteisungsmitteln wird 1 g der zu beurteilenden Substanz fein gemahlen und das Pulver in einem Preßwerkzeug (d = 16 mm) während 25 Minuten unter einem Druck von 100 N/cm² zu einer Tablette gepreßt. Die Tablette wird auf ein Drahtnetz mit 3 mm Drahtabstand gelegt und das Drahtnetz in ein Gefäß mit 200 ml Wasser von 20°C in den Bereich der Hälfte seiner Füllhöhe eingetaucht. Als Maß für die Auflösungsgeschwindigkeit wird die Zeit gemessen, in der sich die Tablette entweder vollständig aufgelöst hat oder ihre Reste durch das Drahtnetz nach unten hindurchgefallen sind. Calcium-Magnesium-Acetate haben danach eine Auflösungsgeschwindigkeit von mehr als 4 Stunden und Calcium-Acetat eine solche von 20 Minuten, während das Erdalkali-Alkali-Acetat gemäß der Erfindung eine Auflösungsgeschwindigkeit von etwa 2 Minuten aufweist.

Beim Verfahren zur Herstellung eines Erdalkali-Natrium-Acetates gemäß der Erfindung wird im Rahmen der Knetreaktion ein pulveriges Produkt erhalten, während bei der Umsetzung der aus Calciumoxid und Wasser erhaltenen Aufschlämmung mit Essigsäure und Natronlauge eine Lösung oder Suspension anfällt, aus der durch Kristallisation oder Sprühtrocknung ein pulveriges Produkt erhältlich ist.

Beim Verfahren zur Herstellung des erfindungsgemäßen Erdalkali-Natrium-Acetates kann die Granulierung des pulverigen Produktes mit geringen Wassermengen auf einem Drehteller oder durch Preßgranulation mit Hilfe eines Walzenkompaktierers erfolgen. Schließlich besteht die Möglichkeit, die bei der Umsetzung der aus Calciumoxid und Wasser erhaltenen Aufschlämmung mit Essigsäure und Natronlauge anfallende Lösung oder Suspension einer Sprühgranulierung zu unterwerfen (Trocknung der wäßrigen Lösung oder Suspension unter gleichzeitiger Granulierung mit Hilfe eines Fließbett-Trockners).

### Beispiel 1

In einem 1 l-Kipp-Kneter mit Z-Knetschaufeln (Fa. Aachener Misch- und Knetmaschinenfabrik Peter Küpper GmbH & Co. KG) wurden 200 g Weißfeinkalk (ca. 89,3 % CaO, 3,18 mol CaO) unter Kneten in einem Zeitraum von 25 Minuten mit 476 g 99,5 %iger Essigsäure (7,89 mol) versetzt und 90 Minuten intensiv geknetet. Anschließend wurde dem essigsauren Umsetzungsprodukt 92 g 50 %ige Natronlauge (1,15 mol) zugesetzt und weitere 120 Minuten geknetet. Die resultierende Substanz bestand nach ihrem Röntgendiffraktogramm zum wesentlichen Teil aus dem erfindungsgemäßen Erdalkali-Natrium-Acetat, ihre Auflösungsgeschwindigkeit war 2 Minuten, ihre 10 %ige wäßrige Lösung wies einen pH-Wert von 9,4 auf und ihr in Wasser unlöslicher Rückstand betrug 2 Gewichts-%.

### Beispiel 2

In dem in Beispiel 1 verwendeten Kneter wurden 200 g Weißfeinkalk (ca. 89,3 % CaO, 3,18 mol CaO) unter Kneten in einem Zeitraum von 20 Minuten mit 437 g 99,5 %iger Essigsäure (7,24 mol) versetzt und 90 Minuten intensiv geknetet. Anschließend wurde dem essigsauren Reaktionsprodukt 45 g 50 % Natronlauge (0,56 mol) zugesetzt und weitere 120 Minuten geknetet. Das resultierende Material bestand aus 21 Gewichts-% Calcium; 0,5 Gewichts-% Magnesium; 2 Gewichts-% Natrium; 68 Gewichts-% Acetat; 6,5 Gewichts-% Wasser und 2 Gewichts-% wasserunlöslichem Rückstand. Nach seinem Röntgendiffraktogramm enthielt das Material das erfindungsgemäße Erdalkali-Natrium-Acetat als Hauptbestandteil und Calciumacetat als Nebenbestandteil, seine Auflösungsgeschwindigkeit war 3 Minuten und der pH-Wert seiner 10 %igen wäßrigen Suspension betrug 9,7.

### Beispiel 3

In dem in Beispiel 1 verwendeten Kneter wurden 200 g Weißfeinkalk (ca. 89,3 % CaO, 3,18 mol CaO) unter Kneten in einem Zeitraum von 25 Minuten mit 536 g 99,5 %iger Essigsäure (8,88 mol) versetzt und 90 Minuten intensiv geknetet. Anschließend wurde dem essigsauren Reaktionsprodukt 160 g 50 %iger Natronlauge (2,00 mol) zugesetzt und weitere 180 Minuten geknetet. Das resultierende Material bestand aus 17 Gewichts-% Calcium; 0,3 Gewichts-% Magnesium; 6,2 Gewichts-% Natrium; 67,5 Gewichts-% Acetat; 7 Gewichts-% Wasser und 2 Gewichts-% wasserunlöslichem Rückstand. Nach seinem Röntgendiffraktogramm enthielt das Material das erfindungsgemäße Erdalkali-Natrium-Acetat als Hauptbestandteil und Natriumacetat als Nebenbestandteil, seine Auflösungsgeschwindigkeit war 1,5 Minuten und der pH-Wert seiner 10 %igen wäßrigen Suspension betrug 9,6.

### Beispiel 4

In einem Becherglas wurden zunächst 476 g 99,5 %ige Essigsäure (7,89 mol) mit 92 g 50 %iger Natronlauge (1,15 mol) teilneutralisiert. Diese teilneutralisierte Essigsäure wurde in einem Zeitraum von 25 Minuten 200 g Weißfeinkalk (ca. 89,3 % CaO, 3,18 mol), welcher sich in dem in Beispiel 1 verwendeten Kneter befand, unter Kneten zugesetzt und anschließend 180 Minuten weitergeknetet. Das resultierende Material bestand nach seiner röntgenographischen Untersuchung überwiegend aus dem erfindungsgemäßen Erdalkali-Natrium-Acetat sowie kleineren Mengen Calciumacetat und Natriumacetat. 2 Gewichts-% des Materials waren wasserunlöslich, seine Auflösungsgeschwindigkeit betrug 2 Minuten und seine 10 %ige wäßrige Suspension wies einen pH-Wert von 9,2 auf.

### Beispiel 5

In einem Becherglas wurden zunächst 476 g 99,5 %ige Essigsäure (7,89 mol) mit 60,9 g Natriumcarbonat (0,575 mol) versetzt und so lange gerührt, bis keine CO₂-Entwicklung mehr beobachtet wurde. Anschließend wurde zu der noch trüben Reaktionsmischung unter Rühren so viel Wasser zugegeben, bis sich eine klare Lösung bildete. Die auf diese Weise hergestellte teilneutralisierte Essigsäure wurde in dem in Beispiel 1 verwendeten Kneter mit 200 g Weißfeinkalk (ca. 89,3 % CaO; 3,18 mol) unter Kneten zur Reaktion gebracht. Das resultierende Material entsprach nach seinem Röntgendiffraktogramm dem aus Beispiel 4; sein wasserunlöslicher Anteil betrug etwa 2 Gewichts-%, seine Auflösungsgeschwindigkeit betrug 2 Minuten und seine 10 %ige wäßrige Suspension wies einen pH-Wert von 9,5 auf.

### Beispiel 6

In einem Becherglas wurden zunächst 476 g 99,5 %ige Essigsäure (7,89 mol) mit 164,4 g Soda (0,575 mol) versetzt und so lange gerührt, bis keine CO₂-Entwicklung mehr beobachtet wurde und die Lösung klar war. Diese teilneutralisierte Essigsäure wurde in dem in Beispiel 1 verwendeten Kneter mit 200 g Weißfeinkalk (ca. 89,3 % CaO; 3,18 mol) unter Kneten umgesetzt und anschließend 180 Minuten weitergeknetet. Das resultierende Material entsprach nach seinem Röntgendiffraktogramm dem aus den Beispielen 4 und 5; sein wasserunlöslicher Anteil betrug etwa 2 Gewichts%, seine Auflösungsgeschwindigkeit war 2 Minuten und seine 10 %ige wäßrige Suspension wies einen pH-Wert von 9,5 auf.

### Beispiel 7

In einem Becherglas wurde aus 104 g Weißfeinkalk (ca. 89,3 % CaO, 1,66 mol CaO) und 862 g Wasser eine ca. 10 %ige Kalkmilch hergestellt. Diese Kalkmilch wurde mit 53,3 g 50 %iger Natronlauge (0,666 mol) vermischt und mit 240 g 99,5 %iger Essigsäure (3,977 mol) in einem Zeitraum von 120 Minuten unter Rühren neutralisiert. Anschließend wurde die so hergestellte ca. 25 %ige Erdalkali-Natrium-Acetat-Lösung filtriert und mit Hilfe eines Laborsprühturmes (Typ 190 der Fa. Büchi) mit Heißluft von 200 bis 300 °C sprühgetrocknet. Das resultierende Material enthielt nach röntgenographischer Untersuchung als Hauptbestandteil das erfindungsgemäße Erdalkali-Natrium-Acetat, während Calciumacetat und Natriumacetat Nebenbestandteile waren. Das Material war in Wasser rückstandsfrei löslich, seine Auflösungsgeschwindigkeit betrug 1 Minute und seine 10 %ige wäßrige Lösung wies einen pH-Wert von 8,3 auf.

## Patentansprüche

1. Erdalkali-Natrium-Acetat, bestehend aus
18 bis 22 Gewichts-% Calcium (Ca⁺⁺),
0 bis 1 Gewichts-% Magnesium (Mg⁺⁺),
4 bis 7 Gewichts-% Natrium (Na⁺),
66 bis 75 Gewichts-% Acetat (CH₃COO⁻),
0 bis 7 Gewichts-% Wasser,
0 bis 2 Gewichts-% wasserunlöslichen Anteilen,
welches die folgende Röntgendiffraktion aufweist:
| d / A | Intensität | d / A | Intensität |
|---|---|---|---|
| 12,75 +- 0,2 | s | 2,39 +- 0,02 | sch |
| 9,30 +- 0,1 | m | 2,29 +- 0,02 | sch |
| 6,00 +- 0,08 | m | 2,23 +- 0,02 | msch |
| 4,65 +- 0,05 | sch | 2,13 +- 0,02 | m |
| 3,61 +- 0,04 | sch | 2,04 +- 0,02 | sch |
| 3,40 +- 0,04 | ss | 1,96 +- 0,02 | msch |
| 3,28 +- 0,04 | m | 1,87 +- 0,02 | sch |
| 3,12 +- 0,03 | sch | 1,84 +- 0,02 | sch |
| 2,88 +- 0,03 | msch | 1,80 +- 0,02 | msch |
| 2,65 +- 0,03 | sch | 1,70 +- 0,02 | sch |
| 2,55 +- 0,02 | sch | 1,57 +- 0,02 | sch |
| ss = sehr stark s = stark m = mittel msch = mittel-schwach sch = schwach | | | |

2. Erdalkali-Natrium-Acetat nach Anspruch 1 in Mischung mit bis zu 50 Gewichts% Erdalkali- und/oder Alkali-Carboxylaten mit 1 bis 4 Kohlenstoffatomen.

3. Verwendung des Erdalkali-Natrium-Acetates nach Anspruch 1 als umweltfreundliches, wenig korrosives Enteisungsmittel.

4. Verwendung nach Anspruch 3, dadurch gekennzeichnet, daß dem Erdalkali-Natrium-Acetat bis zu 50 Gewichts% Erdalkali- und/oder Alkali-Carboxylate mit 1 bis 4 Kohlenstoffatomen zugemischt sind.

5. Verfahren zur Herstellung des Erdalkali-Natrium-Acetates nach Anspruch 1, dadurch gekennzeichnet, daß man ein Calciumoxid mit mindestens 85 % CaO, Essigsäure und Natronlauge miteinander umsetzt und das Umsetzungsprodukt zu Teilchen von 0,5 bis 5 mm, vorzugsweise 1,5 bis 2,5 mm, granuliert.

6. Verfahren nach Anspruch 5, dadurch gekennzeichnet, daß festes Calciumoxid mit überschüssiger Essigsäure unter Kneten umgesetzt wird und das essigsaure Umsetzungsprodukt nach Zugabe von Natronlauge weitergeknetet wird.

7. Verfahren nach Anspruch 5, dadurch gekennzeichnet, daß festes Calciumoxid mit teilneutralisierter Essigsäure unter Kneten umgesetzt wird.

8. Verfahren nach Anspruch 5, dadurch gekennzeichnet, daß eine aus Calciumoxid und Wasser gewonnene Aufschlämmung unter Rühren mit Essigsäure und Natronlauge umgesetzt wird.

9. Verfahren nach Anspruch 5, dadurch gekennzeichnet, daß eine aus Calciumoxid und Wasser gewonnene Aufschlämmung unter Rühren mit teilneutralisierter Essigsäure umgesetzt wird.

10. Verfahren nach Anspruch 7 oder 9, dadurch gekennzeichnet, daß die teilneutralisierte Essigsäure aus Natronlauge und Essigsäure erhalten ist.

11. Verfahren nach Anspruch 7 oder 9, dadurch gekennzeichnet, daß die teilneutralisierte Essigsäure aus Natriumcarbonat und Essigsäure erhalten ist.

12. Verfahren nach mindestens einem der Ansprüche 5 bis 11, dadurch gekennzeichnet, daß Essigsäure mit mindestens 98 Gewichts-% CH₃COOH verwendet ist.

13. Verfahren nach mindestens einem der Ansprüche 5 bis 10, dadurch gekennzeichnet, daß Natronlauge mit mindestens 40 Gewichts-% NaOH verwendet ist.

14. Verfahren nach mindestens einem der Ansprüche 8 bis 13, dadurch gekennzeichnet, daß die nach der Umsetzung vorliegende Lösung oder Suspension in einem Sprühtrockner mit Heißluft von 150 bis 400°C getrocknet wird.

15. Verfahren nach mindestens einem der Ansprüche 8 bis 13, dadurch gekennzeichnet, daß die nach der Umsetzung vorliegende Lösung oder Suspension mit Hilfe eines Fließbett-Trockners unter gleichzeitiger Granulierung getrocknet wird.

## Claims

1. An alkaline earth metal sodium acetate, comprising
18 to 22 % by weight of calcium (Ca⁺⁺),
0 to 1 % by weight of magnesium (Mg⁺⁺),
4 to 7 % by weight of sodium (Na⁺),
66 to 75 % by weight of acetate (CH₃COO⁻),
0 to 7 % by weight of water
and
0 to 2 % by weight of water-insoluble components,
which has the following X-ray diffraction pattern:
| d/A | Intensity | d/A | Intensity |
|---|---|---|---|
| 12.75 +- 0.2 | s | 2.39 +- 0.02 | w |
| 9.30 +- 0.1 | m | 2.29 +- 0.02 | w |
| 6.00 +- 0.08 | m | 2.23 +- 0.02 | mw |
| 4.65 +- 0.05 | w | 2.13 +- 0.02 | m |
| 3.61 +- 0.04 | w | 2.04 +- 0.02 | w |
| 3.40 +- 0.04 | vs | 1.96 +- 0.02 | mw |
| 3.28 +- 0.04 | m | 1.87 +- 0.02 | w |
| 3.12 +- 0.03 | w | 1.84 +- 0.02 | w |
| 2.88 +- 0.03 | mw | 1.80 +- 0.02 | mw |
| 2.65 +- 0.03 | w | 1.70 +- 0.02 | w |
| 2.55 +- 0.02 | w | 1.57 +- 0.02 | w |
| vs = very strong s = strong m = medium mw = medium-weak w = weak | | | |

2. The alkaline earth metal sodium acetate as claimed in claim 1 as a mixture with up to 50% by weight of alkaline earth metal and/or alkali metal carboxylates having 1 to 4 carbon atoms.

3. Use of the alkaline earth metal sodium acetate as claimed in claim 1 as an environmentally friendly deicing agent causing little corrosion.

4. Use as claimed in claim 3, wherein up to 50% by weight of alkaline earth metal and/or alkali metal carboxylates having 1 to 4 carbon atoms are mixed with the alkaline earth metal sodium acetate.

5. A process for the preparation of the alkaline earth metal sodium acetate as claimed in claim 1, wherein a calcium oxide containing at least 85% of CaO, acetic acid and sodium hydroxide solution are reacted with one another and the reaction product is granulated to give particles of 0.5 to 5 mm, preferably 1.5 to 2.5 mm.

6. The process as claimed in claim 5, wherein solid calcium oxide is reacted with excess acetic acid with kneading, and the reaction product containing acetic acid is further kneaded after the addition of sodium hydroxide solution.

7. The process as claimed in claim 5, wherein solid calcium oxide is reacted with partly neutralized acetic acid with kneading.

8. The process as claimed in claim 5, wherein a slurry obtained from calcium oxide and water is reacted with acetic acid and sodium hydroxide solution while stirring.

9. The process as claimed in claim 5, wherein a slurry obtained from calcium oxide and water is reacted with partly neutralized acetic acid while stirring.

10. The process as claimed in claim 7 or 9, wherein the partly neutralized acetic acid is obtained from sodium hydroxide solution and acetic acid.

11. The process as claimed in claim 7 or 9, wherein the partly neutralized acetic acid is obtained from sodium carbonate and acetic acid.

12. The process as claimed in at least one of claims 5 to 11, wherein acetic acid containing at least 98% by weight of CH₃COOH is used.

13. The process as claimed in at least one of claims 5 to 10, wherein sodium hydroxide solution containing at least 40% by weight of NaOH is used.

14. The process as claimed in at least one of claims 8 to 13, wherein the solution or suspension present after the reaction is dried in a spray dryer with hot air at 150 to 400°C.

15. The process as claimed in at least one of claims 8 to 13, wherein the solution or suspension present after the reaction is dried with the aid of a fluidized-bed dryer with simultaneous granulation.

## Revendications

1. Acétate de sodium-métal alcalino-terreux, consistant en
18 à 22 % en poids de calcium (Ca⁺⁺),
0 à 1 % en poids de magnésium (Mg⁺⁺),
4 à 7 % en poids de sodium (Na⁺),
66 à 75 % en poids d'acétate (CH₃COO⁻),
0 à 7 % en poids d'eau,
0 à 2 % en poids de fractions insolubles dans l'eau,
et qui présente le diagramme de diffraction de rayons X suivant:
| **d/A** | **Intensité** | **d/A** | **Intensité** |
|---|---|---|---|
| 12,75 ± 0,2 | F | 2,39 ± 0,02 | f |
| 9,30 ± 0,1 | m | 2,29 ± 0,02 | f |
| 6,00 ± 0,08 | m | 2,23 ± 0,02 | mf |
| 4,65 ± 0,05 | f | 2,13 ± 0,02 | m |
| 3,61 ± 0,04 | f | 2,04 ± 0,02 | f |
| 3,40 ± 0,04 | FF | 1,96 ± 0,02 | mf |
| 3,28 ± 0,04 | m | 1,87 ± 0,02 | f |
| 3,12 ± 0,03 | f | 1,84 ± 0,02 | f |
| 2,88 ± 0,03 | mf | 1,80 ± 0,02 | mf |
| 2,65 ± 0,03 | f | 1,70 ± 0,02 | f |
| 2,55 ± 0,02 | f | 1,57 ± 0,02 | f |
| FF = très forte F = forte m = moyenne mf = moyenne-faible f = faible | | | |

2. Acétate de sodium-métal alcalino-terreux selon la revendication 1, en mélange avec jusqu'à 50 % en poids de carboxylates de métaux alcalino-terreux et/ou alcalins en C₁-C₄.

3. Utilisation de l'acétate de sodium-métal alcalino-terreux selon la revendication 1 en tant qu'agent antigel non polluant et peu corrosif.

4. Utilisation selon la revendication 3, caractérisée en ce que l'on mélange avec l'acétate de sodium-métal alcalino-terreux jusqu'à 50 % en poids de carboxylates alcalino-terreux et/ou alcalins en C₁-C₄.

5. Procédé de préparation de l'acétate de sodium-métal alcalino-terreux selon la revendication 1, caractérisé en ce que l'on fait réagir entre eux un oxyde de calcium à au moins 85 % de CaO, un acide acétique et de la lessive de soude et on met le produit de réaction à l'état de granules de dimensions 0,5 à 5 mm, de préférence 1,5 à 2,5 mm.

6. Procédé selon la revendication 5, caractérisé en ce que l'on fait réagir sous malaxage de l'oxyde de calcium solide avec un excès d'acide acétique et, après addition de lessive de soude, on poursuit le malaxage du produit de réaction contenant de l'acide acétique.

7. Procédé selon la revendication 5, caractérisé en ce que l'on fait réagir l'oxyde de calcium solide avec l'acide acétique partiellement neutralisé sous malaxage.

8. Procédé selon la revendication 5, caractérisé en ce que l'on fait réagir une dispersion obtenue à partir d'oxyde de calcium et d'eau, sous agitation, avec l'acide acétique et la lessive de soude.

9. Procédé selon la revendication 5, caractérisé en ce que l'on fait réagir une dispersion obtenue à partir d'oxyde de calcium et d'eau, sous agitation, avec de l'acide acétique partiellement neutralisé.

10. Procédé selon la revendication 7 ou 9, caractérisé en ce que l'acide acétique partiellement neutralisé est obtenu à partir de lessive de soude et d'acide acétique.

11. Procédé selon la revendication 7 ou 9, caractérisé en ce que l'acide acétique partiellement neutralisé est obtenu à partir de carbonate de sodium et d'acide acétique.

12. Procédé selon au moins l'une des revendications 5 à 11, caractérisé en ce que l'on utilise un acide acétique à au moins 98 % en poids de CH₃COOH.

13. Procédé selon au moins l'une des revendications 5 à 10, caractérisé en ce que l'on utilise une lessive de soude à au moins 40 % en poids de NaOH.

14. Procédé selon au moins l'une des revendications 8 à 13, caractérisé en ce que la solution ou suspension obtenue après la réaction est séchée dans un séchoir-atomiseur avec de l'air chaud à une température de 150 à 400°C.

15. Procédé selon au moins l'une des revendications 8 à 13, caractérisé en ce que la solution ou suspension obtenue après la réaction est séchée avec granulation simultanée dans un séchoir à lit fluidisé.
